# NEUE EUROPÄISCHE PATENTSCHRIFT

(11) **EP 1 134 014 B2**
(45) Veröffentlichungstag und Bekanntmachung des Hinweises auf die Entscheidung über den Einspruch: **14.07.2010**
(45) Hinweis auf die Patenterteilung: 28.03.2007
(21) Anmeldenummer: 01101789.4
(22) Anmeldetag: 26.01.2001
(51) Int. Cl.: B01D 46/52, B01D 46/42

(54) **Filtereinsatz**
Pleated filter
Filtre plissé

(30) Priorität: 17.03.2000 DE 10013301
(43) Veröffentlichungstag der Anmeldung: 19.09.2001
(73) Patentinhaber: Carl Freudenberg KG, 69469 Weinheim (DE)
(72) Erfinder: Fath, Jürgen, 69469 Weinheim (DE); Schöttmer, Dieter, 44269 Dortmund (DE)

(56) Entgegenhaltungen:
- EP-A- 0 623 377
- EP-A- 0 721 792
- EP-A- 0 759 319
- DE-A- 4 344 505
- DE-C1- 19 512 678
- US-A- 3 853 529
- PATENT ABSTRACTS OF JAPAN vol. 1999, no. 01, 29. Januar 1999 (1999-01-29) & JP 10 286421 A (KANSEI CORP), 27. Oktober 1998 (1998-10-27)

## Beschreibung

### Technisches Gebiet

Die Erfindung befaßt sich mit einem Filtereinsatz, der aus einem zickzackförmig gefalteten Faltenpack besteht und der in einem Rahmen bei Lüftungsanlagen, Klimaanlagen und dergleichen verwendet werden kann. Die Ausbildung des Faltenpacks und die Auswahl des dafür verwendeten Materials ist abhängig von den filtertechnischen Eigenschaften und dem erforderlichen Luftdurchsatz.

### Stand der Technik

Bekannt ist beispielsweise durch die DE 195 12 678 C1 ein Filtereinsatz, der als Faltenpack ausgebildet ist und aus einem thermoplastisch verschweißbaren Vliesstoff besteht. Ein sich immer wieder stellendes Problem bei derartigen Filtern ist seine Abdichtung gegenüber dem ihn aufnehmenden Rahmen bzw. Gehäuse. Als Lösung hierfür bietet der bekannte Filtereinsatz eine die Stirnseiten des Faltenpacks erfassende kombinierte Dichtungs- und Versteifungslasche an, die im Querschnitt gesehen, wurzelzeichenförmig ausgebildet ist. Die Dichtungslasche hat einen V-förmigen Querschnitt, der auf der Anströmseite des zu filternden Mediums offen ist, so daß sich die Dichtungslasche unter elastischer Vorspannung dichtend an das Gehäuse anlegt. Diese Lösung brachte gute Ergebnisse, benötigt jedoch seitlich zusätzlichen Raum, welcher für den Filtervorgang nur bedingt zur Verfügung steht. Darüber hinaus hat sich unter bestimmten Randbedingungen die Montage der wurzelzeichenförmig ausgebildeten Dichtungs- und Versteifungslasche als problematisch herausgestellt.

Ein weiterer Stand der Technisch ergibt sich aus der EP 0 759 319 A1.

### Darstellung der Erfindung

Der Erfindung liegt deshalb die Aufgabe zugrunde, einen Filtereinsatz zu schaffen, der einfach in seinem Aufbau ist und der ohne Schwierigkeiten in einen entsprechenden Rahmen oder ein Gehäuse eingesetzt werden kann. Dabei soll der Filtereinsatz über eine gute Abdichtung an seinen parallel zur Faltung verlaufenden Stirnseiten, verfügen. Die Lösung der gestellten Aufgabe wird mit den Merkmalen des Anspruch 1 erreicht. Die an den Anspruch 1 anschließenden Unteransprüche stellen weitere vorteilhafte Ausbildungen der Erfindung dar.

Der Erfindungsgedanke beruht darin, daß der Faltenpack mit Abschlußelementen versehen wird, die aus den Faltenpack teilweise überdeckenden Versteifungsstreifen und aus mit den Versteifungsstreifen integral verbundenen Dichtelementen bestehen. Die Versteifungsstreifen sind an den parallel zur Faltung verlaufenden Stirnseiten des Faltenpacks angebracht. Bei der kontinuierlichen Herstellung von zickzackförmig gefalteten Faltenpacks werden die Faltenpacks in gewünschten Längen abgeschnitten. Hierdurch entsteht die Notwendigkeit, die Stirnseiten des Faltenpacks zu versteifen und mit einem Dichtelement zu versehen. Um die vereinfachte Ausführungsform des Dichtelements zu erreichen, werden die Versteifungsstreifen auf der Ausströmseite des Faltenpacks angebracht. Die Anbringung kann beispielsweise im Klebe- oder Schweißverfahren erfolgen, in Abhängigkeit auch davon, welche Materialien für die Abschlußelemente vorgesehen sind.

Um durch die Anbringung der Versteifungsstreifen im Randbereich des Faltenpacks die Durchströmung des Filtereinsatzes so wenig wie möglich zu beeinflussen, können die Versteifungsstreifen sägezahnartig ausgebildet sein. Möglich ist auch die Verwendung von Versteifungsstreifen, die gelocht oder perforiert sind.

Die Anbringung der Versteifungsstreifen auf der Ausströmseite des Faltenpacks erlaubt den Einsatz von Dichtelementen, die aus zur Einströmseite des Faltenpacks gerichteten Dichtlaschen bestehen. Der Filtereinsatz ist so dimensioniert, daß die Dichtlaschen mit ihren an die Versteifungsstreifen anschließenden Bereichen in die Einsatzöffnung des Rahmens bzw. Gehäuses hineinpassen, während die weiter außen liegenden Bereiche über die Einsatzöffnung hinausstehen und mit leichtem Druck in die Öffnung eingefügt werden. Sie liegen dann mit ihren Endkanten an der Gehäusewandung dichtend an. Dabei ist es günstig, wenn die Dichtlaschen eine geringere Höhe als die Faltenhöhe haben, so daß sie mit ihrer Außenkante an der Gehäusewand, die in der Regel die gleiche Höhe wie die Faltenhöhe hat, dichtend anliegen. Auf der anderen Seite sollten die Dichtlaschen in ihrer Höhe so bemessen sein, daß sie mindestens 10% der Faltenhöhe haben, um eine ausreichende Toleranz zwischen dem Filtereinsatz und dem Gehäuse überdecken zu können.

In Abhängigkeit von dem zur Verfügung stehenden Rahmen und auch von dem für die Dichtelemente verwendeten Material, können die Dichtlaschen in ihrer Längsrichtung konvex oder konkav gebogen sein. Hierdurch können auch größere Druckunterschiede am Filtereinsatz und die Verwendung weicher Materialien für die Dichtelemente ermöglicht werden. Die Abdichtung kann dabei durch den bestehenden Druckunterschied verstärkt werden.

In ihrer generellen Ausführungsform werden die Versteifungsstreifen und die Dichtelemente aus einem Material gleicher Stärke hergestellt. Sie sind über eine Biegefalte miteinander verbunden. Die Steifigkeit des Materials wird so gewählt, daß der Filtereinsatz im Gehäuse oder Rahmen kraftschlüssig gehalten wird. Die Biegefalte läßt ein geringfügiges Verbiegen des Dichtelements gegenüber den Versteifungsstreifen zu. Möglich ist aber auch eine Ausbildung des Abschlußelements, bei der die Versteifungsstreifen und die Dichtelemente eine unterschiedliche Stärke und/oder auch Materialdichte aufweisen. Hier bestehen große Anpassungsmöglichkeiten an gegebene Verhältnisse. Da die Faltenpacks überwiegend aus Vliesstoff bestehen, bietet sich als Werkstoff für die Abschlußelemente ebenfalls ein Vliesstoff an. Hiermit ist die Darstellung sortenreiner Bauteile möglich. Möglich ist aber auch die Verwendung von Thermoplasten als Werkstoff.

### Kurzbeschreibung der Zeichnungen

Anhand der in den Zeichnungen dargestellten Ausführungsbeispiele wird die Erfindung nachstehend näher erläutert.

Es zeigen:
- Fig. 1: einen Querschnitt durch einen Filtereinsatz;
- Fig. 2: den Filtereinsatz nach Fig. 1 in der perspektivischen Ansicht;
- Fig. 3: einen Filtereinsatz mit sägezahnartig ausgebildeten Versteifungsstreifen in der perspektivischen Ansicht;
- Fig. 4: einen Filtereinsatz mit gelochten Versteifungsstreifen;

### Ausführung der Erfindung

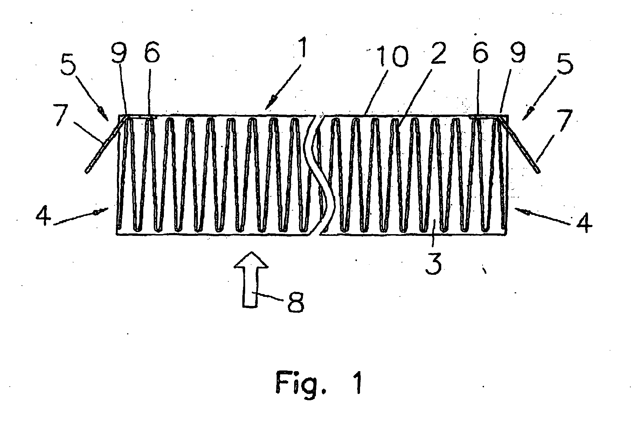

Die Fig. 1 zeigt einen Filtereinsatz 1 aus einem zickzackförmig gefalteten Faltenpack 2 im Querschnitt. Der Filtereinsatz 1 ist an seinen beiden Seiten von einer Dichtung 3 eingefaßt. An seinen Stirnseiten 4 sind die Abschlußelemente 5 vorgesehen, die aus den Versteifungsstreifen 6 und den damit integral verbundenen Dichtelementen 7 bestehen. Die Versteifungsstreifen 6 sind mit dem Randbereich des Faltenpacks 2 unlösbar, zum Beispiel durch Schweißnen oder Kleben verbunden. Durch den Pfeil 8 ist die Durchströmrichtung der Luft durch den Filtereinsatz angezeigt. Der Filtereinsatz 1 wird in ein nicht näher gezeigtes Gehäuse eingefügt, wobei die Dichtelemente 7 geringfügig in Richtung auf den Faltenpack 2 gedrückt werden. Um diese Bewegung der Dichtelemente 7 zu erleichtern, ist zwischen den Versteifungsstreifen 6 und den Dichtelementen 7 eine Biegefalte 9 vorgesehen. Ein solcher Filter ist sehr einfach in seinem Aufbau und erfüllt die an ihn gestellten Anforderungen.

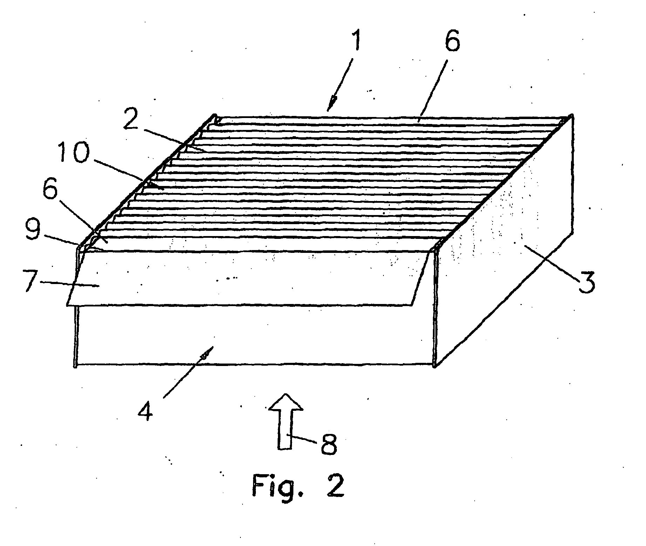

In der Fig. 2 ist der Filtereinsatz 1 in der perspektivischen Ansicht gezeigt. Die Versteifungsstreifen 6 befinden sich auf der Ausströmseite 10 des Filtereinsatzes 1. Die Dichtelemente 7 verlaufen parallel zu den Stirnseiten 4 des Faltenpacks 2. Die Abdichtung 3 deckt die Seitenflächen des Faltenpacks 2 ab. Die zu filternde Luftströmung ist durch den Pfeil 8 angegeben.

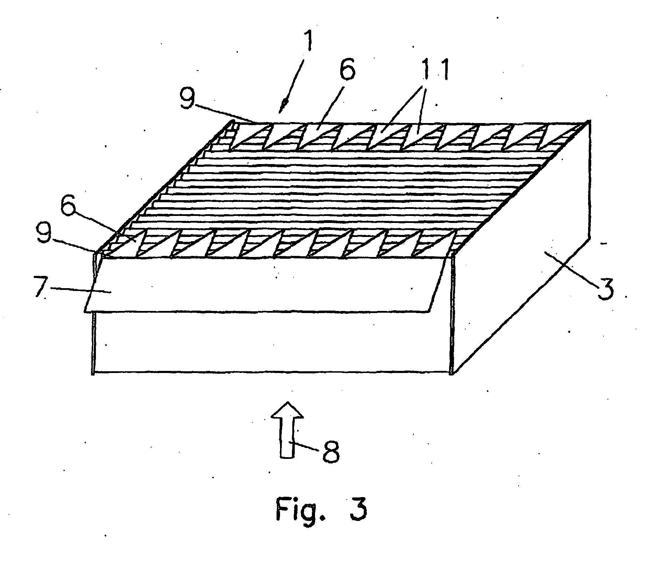

In der Fig. 3 ist der Aufbau des Filtereinsatzes 1 vergleichbar mit dem Filteraufbau aus den vorangegangenen Figuren mit der Abweichung, daß die Versteifungsstreifen 6 sägezahnartig ausgebildet sind. Die Sägezähne 11 gehen in diesem Ausführungsbeispiel bis an die Biegefalte 9 heran.

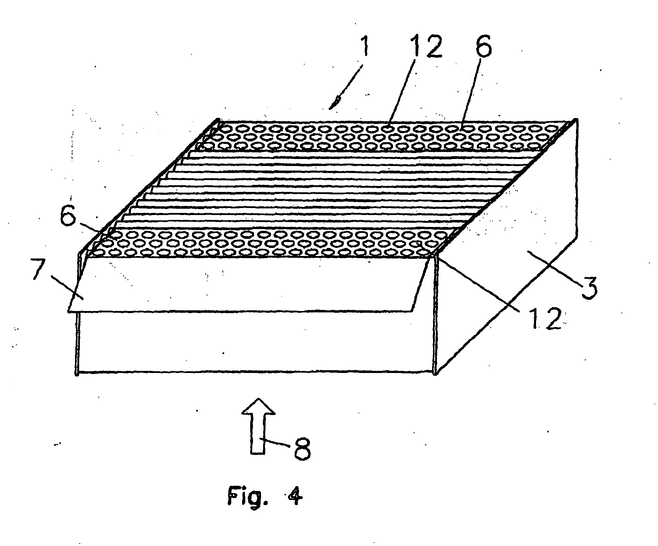

Eine weitere Möglichkeit, den Versteifungsstreifen 6 möglichst luftdurchlässig zu gestalten, ist in der Fig. 4 enthalten. Hier sind die Versteifungsstreifen 6 des Filtereinsatzes 1 mit den Löchern 12 versehen.

Bei allen Ausführungsformen der Figuren 1 bis 6 wird die Höhe h der Dichtlaschen 7 so gewählt, daß sie geringer ist als die Faltenhöhe H des Faltenpacks 2. Dadurch wird eine möglichst günstige Abdichtung an der nicht näher gezeigten Gehäusewand erreicht. Die Höhe h der Dichtlaschen beträgt jedoch mindestens 10% der Faltenhöhe H.

In der Fig. 7 ist im Querschnitt die Anbringung eines Dichtelements 7 gezeigt, das schlauchartig ausgebildet ist. Das Dichtelement 7 wird durch eine geschlitzte schlauchartige Rolle 15 gebildet; die Schlitzränder 16 und 17 der Rolle 15 sind jeweils mit einem Versteifungsstreifen 6, 6' verbunden. Die Versteifungsstreifen 6, 6' werden beim Aufbringen auf den Faltenpack 2 unlösbar verbunden, beispielsweise durch Verschweißen.

Anstelle der Rolle 15 kann auch eine andere Hohlform für das Dichtelement 7 gewählt werden. So zeigt die Fig. 8 eine, im Querschnitt gesehen, dreieckige Ausbildung der Hohlform. Diese ist dann günstig, wenn eine hohe Steifigkeit für das Abschlußelement 5 gewünscht wird. Die konkav gebogene Wand 18 der Hohlform kann als Dichtlasche angesehen werden, die durch im Winkel zueinanderstehenden Wände 20 und 21 in ihrer Steifigkeit verstärkt wird.

Eine besondere Ausgestaltung eines Abschlußelements 5 ist in der Fig. 9 gezeigt. Dort ist das Dichtelement 7 U-förmig ausgebildet und mit seinen freien Rändern 16 und 17 mit den Versteifungsstreifen 6, 6' verbunden. Der Versteifungsstreifen 6 ist auf der in der Zeichnung gesehen oberen Seite des Faltenpacks 2 angebracht, während der Versteifungsstreifen 6' auf der unteren Seite liegt. Bei dieser Ausbildung des Dichtelements 7 ist die Durchströmungsrichtung des Filtereinsatzes 1 von untergeordneter Bedeutung, so daß dieser Filtereinsatz 1 auch in umgekehrter Richtung in das Gehäuse bzw. den Rahmen eingesetzt werden kann.

## Patentansprüche

1. Filtereinsatz aus einem zickzackförmig gefalteten Faltenpack, an den parallel zur Faltung verlaufenden Stirnseiten (4) des Faltenpacks (2) Abschlußelemente (5) vorgesehen sind, die aus den Faltenpack (2), wenigstens auf seiner Ausströmseite teilweise überdeckenden Versteifungsstreifen (6) und aus mit den Versteifungsstreifen (6) integral verbundenen Dichtelementen (7) bestehen **dadurch gekennzeichnet, daß** die Versteifungsstreifen (6) und die Dichtelemente (7) über eine Biegefalte 9 miteinander verbunden sind.

2. Filtereinsatz nach Anspruch 1, **dadurch gekennzeichnet, daß** die Versteifungsstreifen (6) sägezahnartig ausgebildet sind.

3. Filtereinsatz nach Anspruch 1, **dadurch gekennzeichnet, daß** die Versteifungsstreifen (6) gelocht oder perforiert sind.

4. Filtereinsatz nach einem der Ansprüche 1 bis 3, **dadurch gekennzeichnet, daß** die Dichtelemente (7) aus zur Einströmseite (13) des Faltenpacks (2) gerichtete Dichtlaschen (7) bestehen.

5. Filtereinsatz nach einem der Ansprüche 1 bis 4, **dadurch gekennzeichnet, daß** die Dichtlaschen (7) in ihrer Längsrichtung konvex oder konkav gebogen sind.

6. Filtereinsatz nach einem der Ansprüche 1 bis 5, **dadurch gekennzeichnet, daß** die Höhe (h) der Dichtlaschen (7) mindestens 10% der Faltenhöhe (H) des Faltenpacks (2) beträgt.

7. Filtereinsatz nach einem der Ansprüche 1 bis 3, **dadurch gekennzeichnet, daß** die Dichtelemente (7) schlauchartig ausgebildet sind.

8. Filtereinsatz nach Anspruch 7, **dadurch gekennzeichnet, daß** die Dichtelemente (7) aus einer geschlitzten schlauchartigen Rolle (15) bestehen, wobei an den Schlitzrändern (16, 17) jeweils ein Versteifungsstreifen (6,6') anschließt.

9. Filtereinsatz nach einem der Ansprüche 1 bis 3, **dadurch gekennzeichnet, daß** die Dichtelemente (7) U-förmig ausgebildet sind und mit ihren freien Rändern (16, 17) an Versteifungsstreifen (6, 6') anschließen, wobei jeweils einer der Versteifungsstreifen (6, 6') an einer Seite des Faltenpacks (2) angeordnet ist.

10. Filtereinsatz nach einem der Ansprüche 1 bis 9, **dadurch gekennzeichnet, daß** die Versteifungsstreifen (6) und die Dichtelemente (7) eine unterschiedliche Stärke und/oder Materialdichte aufweisen.

11. Filtereinsatz nach einem der Ansprüche 1 bis 10, **dadurch gekennzeichnet, daß** die Versteifungsstreifen (6) und die Dichtelemente (7) aus unterschiedlichen Werkstoffen bestehen.

12. Filtereinsatz nach einem der Ansprüche 1 bis 11, **dadurch gekennzeichnet, daß** als Werkstoff ein Vliesstoff eingesetzt wird.

13. Filtereinsatz nach einem der Ansprüche 1 bis 11, **dadurch gekennzeichnet, daß** als Werkstoff ein Thermoplast eingesetzt ist.

## Claims

1. Filter insert consisting of a folded pack folded in a zigzag shaped manner, on those end faces (4) of the folded pack (2) which run parallel to the folding, closing-off elements (5) being provided which consist of stiffening strips (6) partially covering the folded pack (2) at least on its outflow side and of sealing elements (7) connected integrally to the stiffening strips (6), **characterized in that** the stiffening strips (6) and the sealing elements (7) are connected to one another via a bending fold (9).

2. Filter insert according to Claim 1, **characterized in that** the stiffening strips (6) have a sawtooth-like design.

3. Filter insert according to Claim 1, **characterized in that** the stiffening strips (6) are holed or perforated.

4. Filter insert according to one of Claims 1 to 3, **characterized in that** the sealing elements (7) consist of sealing tabs (7) directed towards the inflow side (13) of the folded pack (2).

5. Filter insert according to one of Claims 1 to 4, **characterized in that** the sealing tabs (7) are curved convexly or concavely in their longitudinal direction.

6. Filter insert according to one of Claims 1 to 5, **characterized in that** the height (h) of the sealing tabs (7) amounts to at least 10% of the fold height (H) of the folded pack (2).

7. Filter insert according to one of Claims 1 to 3, **characterized in that** the sealing elements (7) are of tube-like design.

8. Filter insert according to Claim 7, **characterized in that** the sealing elements (7) consist of a slotted tube-like roll (15), a stiffening strip (6, 6') in each case adjoining the slot edges (16, 17).

9. Filter insert according to one of Claims 1 to 3, **characterized in that** the sealing elements (7) are of U-shaped design and with their free edges (16, 17) adjoin stiffening strips (6, 6'), in each case one of the stiffening strips (6, 6') being arranged on one side of the folded pack (2).

10. Filter insert according to one of Claims 1 to 9, **characterized in that** the stiffening strips (6) and the sealing elements (7) have a different thickness and/or material density.

11. Filter insert according to one of Claims 1 to 10, **characterized in that** the stiffening strips (6) and the sealing elements (7) consist of different materials.

12. Filter insert according to one of Claims 1 to 11, **characterized in that** the material used is a nonwoven.

13. Filter insert according to one of Claims 1 to 11, **characterized in that** the material used is a thermoplastic.

## Revendications

1. Garniture de filtre composée d'un élément plissé en zigzag, il étant prévu, sur les faces frontales (4) de l'élément plissé (2) parallèles au plissage, des éléments de terminaison (5) qui sont composés de bandes de renforcement (6) recouvrant partiellement l'élément plissé (2) au moins sur son côté de sortie et d'éléments d'étanchéité (7) reliés intégralement aux bandes de renforcement (6), **caractérisée en ce que** les bandes de renforcement (6) et les éléments d'étanchéité (7) sont reliés entre eux par un pli de flexion (9).

2. Garniture de filtre selon la revendication 1, **caractérisée en ce que** les bandes de renforcement (6) sont réalisées en forme de dents de scie.

3. Garniture de filtre selon la revendication 1, **caractérisée en ce que** les bandes de renforcement (6) sont ajourées ou perforées.

4. Garniture de filtre selon l'une quelconque des revendications 1 à 3, **caractérisée en ce que** les éléments d'étanchéité (7) se composent de volets d'étanchéité (7) orientés vers le côté d'entrée (13) de l'élément plissé (2).

5. Garniture de filtre selon l'une quelconque des revendications 1 à 4, **caractérisée en ce que** les volets d'étanchéité (7) présentent une courbure convexe ou concave dans leur direction longitudinale.

6. Garniture de filtre selon l'une quelconque des revendications 1 à 5, **caractérisée en ce que** la hauteur (h) des volets d'étanchéité (7) vaut au moins 10% de la hauteur (H) des plis de l'élément plissé (2).

7. Garniture de filtre selon l'une quelconque des revendications 1 à 3, **caractérisée en ce que** les éléments d'étanchéité (7) sont réalisés en forme de tuyau flexible.

8. Garniture de filtre selon la revendication 7, **caractérisée en ce que** les éléments d'étanchéité (7) se composent d'un rouleau en forme de tuyau flexible fendu (15), dans laquelle une bande de renforcement (6, 6') se raccorde chaque fois aux bords de la fente (16, 17).

9. Garniture de filtre selon l'une quelconque des revendications 1 à 3, **caractérisée en ce que** les éléments d'étanchéité (7) sont réalisés en forme de U et se raccordent par leurs bords libres (16, 17) à des bandes de renforcement (6, 6'), dans laquelle une des bandes de renforcement (6, 6') est chaque fois disposée sur un côté de l'élément plissé (2).

10. Garniture de filtre selon l'une quelconque des revendications 1 à 9, **caractérisée en ce que** les bandes de renforcement (6) et les éléments d'étanchéité (7) présentent une épaisseur et/ou une densité de matière différente.

11. Garniture de filtre selon l'une quelconque des revendications 1 à 10, **caractérisée en ce que** les bandes de renforcement (6) et les éléments d'étanchéité (7) sont constitués de matières différentes.

12. Garniture de filtre selon l'une quelconque des revendications 1 à 11, **caractérisée en ce que** l'on utilise comme matière un non-tissé.

13. Garniture de filtre selon l'une quelconque des revendications 1 à 11, **caractérisée en ce que** l'on utilise comme matière un thermoplastique.
